# EUROPÄISCHE PATENTSCHRIFT

(11) **EP 4 551 832 B1**
(45) Veröffentlichungstag und Bekanntmachung des Hinweises auf die Patenterteilung: **01.04.2026**
(21) Anmeldenummer: 23731944.7
(22) Anmeldetag: 01.06.2023
(51) Int. Cl.: F16C 19/06, F16C 33/62, F16C 33/64, F16C 33/32, F16C 33/58

(54) **VERFAHREN ZUR WIEDERAUFBEREITUNG GEBRAUCHTER WÄLZLAGER UND DANACH HERGESTELLTES WÄLZLAGER**
METHOD FOR REPROCESSING USED ROLLING BEARINGS, AND ROLLING BEARING PRODUCED BY THE METHOD
PROCÉDÉ DE RETRAITEMENT DE PALIERS À ROULEMENT USAGÉS ET PALIER À ROULEMENT PRODUIT PAR LE PROCÉDÉ

(30) Priorität: 06.07.2022 DE 102022116870
(43) Veröffentlichungstag der Anmeldung: 14.05.2025
(73) Patentinhaber: Schaeffler Technologies AG & Co. KG, 91074 Herzogenaurach (DE)
(72) Erfinder: BRAUN, Wolfgang, 97493 Garstadt (DE); MERKLEIN, Carsten, 90491 Nürnberg (DE); PAUSCH, Michael, 97456 Dittelbrunn (DE); PAPKE, Thomas, 90607 Rückersdorf (DE); HECKL, Astrid, 91183 Abenberg (DE)
(74) Vertreter: Schaeffler Technologies
(86) Internationale Anmeldenummer: PCT/DE2023/100416
(87) Internationale Veröffentlichungsnummer: WO 2024/008228

(56) Entgegenhaltungen:
- DE-A1- 102017 115 803
- DE-A1- 102019 202 840
- DE-A1- 102019 216 995
- JP-A- 2021 025 598

## Beschreibung

Die Erfindung betrifft ein Verfahren zur Wiederaufbereitung gebrauchter Wälzlager umfassend Wälzlagerbauteile aus einem metallischen Grundwerkstoff, wie Wälzlagerringe oder Wälzkörper, und danach hergestellte wiederaufbereitete Wälzlager.

Die EP 2 373 456 B1 offenbart ein Verfahren zur Reparatur eines metallischen Artefakts mit einem offenen Defekt. Dazu erfolgt ein Kaltschmieden zum Schließen des offenen Defekts gefolgt von einem Laserauftragsschweißen, um den kaltgeschmiedeten Defekt mit einer Metallschicht zu bedecken.

Im Bereich der Wälzlagertechnik ist es bereits bekannt, Lagerbauteile bei lediglich moderaten Gebrauchsschäden wiederaufzubereiten und einer nochmaligen Verwendung zuzuführen, indem die Oberflächen von Lagerringen unter Materialabtrag nachbearbeitet werden. Um das durch den Materialabtrag veränderte Ringmaß auszugleichen, werden solche Lagerringe mit entsprechend größer dimensionierten Wälzkörpersätzen kombiniert.

Lagerbauteile aus kostenintensiven Hochleistungswerkstoffen sind im Hinblick auf eine Wiederverwendung von besonderem Interesse. Meist wird dabei Pulver über heißisostatisches Pressen zu Zylindern verarbeitet, deren Außendurchmesser fertigungsbedingt begrenzt sind. Häufig wird die Funktionalität solcher Hochleistungswerkstoffe aber lediglich im Bereich von Funktionsflächen, wie einer Laufbahn eines Lagerringes oder Wälzkörpers, benötigt.

Die DE 10 2019 216 995 A1 beschreibt bereits Lagerbauteile mit einem Grundkörper, der das Lagerbauteil formt, und zumindest einer auf dem Grundkörper aufgebrachten Beschichtung. Dabei wird der Grundkörper insbesondere aus unlegiertem Stahl, unlegiertem Vergütungsstahl, Standard-Wälzlagerstahl, Gusseisen oder einer anderen metallischen Legierung gebildet. Als Beschichtung wird auf den Grundkörper ein härteres Material, insbesondere legierter Stahl, aufgebracht. Die Ausbildung der Beschichtung erfolgt durch Auftragsschweißen. Weiterhin ist erwähnt, dass das Auftragsschweißen auch zur Wiederaufbereitung eines gebrauchten Großlagerringes eingesetzt werden kann.

Die DE 10 2017 115 803 A1 offenbart ein Verfahren zur Herstellung eines Metallbauteils mit zwei Bauteilabschnitten aus unterschiedlichen Metallmaterialien. Dabei wird auf einen Träger aus einer Hochtemperaturlegierung durch Auftragsschweißen eine Schicht aus warmfestem Stahl aufgebracht, an der eine Wälzlaufbahn ausgebildet wird.

Die DE 10 2019 202 840 A1 beschreibt ein Abrollflächenelement einer Wälzlagerung und ein Verfahren zum Reparieren des Abrollflächenelements. Das Abrollflächenelementumfasst eine Abrollbahn, auf der Wälzkörper zum Abrollen vorgesehen sind. Im Bereich der Abrollbahn ist eine Höhlung vorgesehen, in welcher ein mittels eines Presssitzes fixierter Einsatz eingesetzt ist, der die Abrollbahn mit ausbildet. Eine Reparatur eines Abrollflächenelements erfolgt derart, dass im beschädigten Bereich eine Höhlung gebildet wird und in diese ein über die verbliebene Abrollbahn überstehender Einsatz eingesetzt und der überstehende Bereich mechanisch abgetragen wird, um eine reparierte Abrollbahn auszubilden.

Die JP 2021 025 598 A offenbart ein Wälzlager und ein Verfahren zur Reparatur einer Lauffläche eines Lagerringes. Dabei wird die komplette Laufbahn eines rotierenden Innenringes mit einem Laser bestrahlt, beschichtet und die Beschichtung einer Nachbearbeitung durch Schleifen unterzogen.

Es ist Aufgabe der Erfindung, gebrauchte Wälzlager einer Wiederverwendung zuzuführen und ein Verfahren zur Wiederaufbereitung solcher gebrauchter Wälzlager bereitzustellen.

Die Aufgabe wird für das Verfahren zur Wiederaufbereitung gebrauchter Wälzlager umfassend Wälzlagerbauteile aus einem metallischen Grundwerkstoff mit folgenden

Schritten gelöst:
Bereitstellen des gebrauchten Wälzlagers umfassend mindestens einen Wälzlagerring und eine Anzahl an Wälzkörpern, wobei aus dem metallischen Grundwerkstoff gebildete Wälzlagerringe und/oder Wälzkörper wiederaufbereitbare Wälzkörperbauteile bilden,
Vereinzeln zumindestens der wiederaufbereitbaren Wälzkörperbauteile und Identifizieren mindestens eines der Wiederaufbereitung zuzuführenden Wälzlagerbauteiles aus der Menge an wiederaufbereitbaren Wälzlagerbauteilen,
Abtragen eines Oberflächenbereiches des mindestens einen wiederaufzubereitenden Wälzlagerbauteiles, der einem Laufbahnbereich des wiederaufzubereitenden Wälzlagerbauteiles entspricht, unter Vorbereitung eines Aufnahmebereiches zur Aufnahme eines metallischen Reparaturwerkstoffs,
optionales Auftragen eines Zwischenlagenmaterials auf den metallischen Grundwerkstoff im Aufnahmebereich,
Auftragen des metallischen Reparaturwerkstoffes in dem Aufnahmebereich auf den metallischen Grundwerkstoff oder gegebenenfalls auf das Zwischenlagenmaterial, unter Ausbildung einer Laufbahnschicht, wobei der metallische Reparaturwerkstoff aus Stahl der Sorte 1.3344 (X 130 WMoCrV 6-5-4-3) oder aus martensitischem Edelstahl, insbesondere der Sorte 1.4034 (X46Cr13), oder aus einem Hartmetall auf Basis von Wolframkarbid in einer Nickel-Bindematrix ausgewählt wird, wobei der metallische Reparaturwerkstoff mit dem metallischen Grundwerkstoff oder gegebenenfalls dem Zwischenlagenmaterial verschmolzen wird,
Durchführung einer Nachbearbeitung einer freien Oberfläche der Laufbahnschicht unter Bereitstellung mindestens eines wiederaufbereiteten Wälzlagerbauteiles, wobei die freie Oberfläche der Laufbahnschicht spanabhebend nachbearbeitet und nachverfestigt wird, und
Zusammenbau des mindestens einen wiederaufbereiteten Wälzlagerbauteils mit den übrigen Wälzlagerbauteilen des gebrauchten Wälzlagers zu einem wiederaufbereiteten Wälzlager.

Um eine Wiederaufbereitung von Wälzlagerbauteilen unter Beibehaltung der Innen- und/oder Außengeometrie zu gewährleisten, wird der abgetragene Oberflächenbereich also ersetzt, das heißt wieder aufgebaut. Hierzu wird eine Laufbahnschicht ausreichender Dicke und Härte aufgebracht. Sofern der Reparaturwerkstoff zudem eine höhere Verschleißfestigkeit als das abgetragene Material des metallischen Grundwerkstoffes aufweist, ist die Aufbringung einer Laufbahnschicht auch für die Ausbildung höherwertiger Wälzlagerbauteile mit verbesserten Eigenschaften im Hinblick auf Verschleißfestigkeit und Haltbarkeit im Sinne eines Upcyclings geeignet.

Vorzugsweise erfolgt das Abtragen des Oberflächenbereiches mittels Drehens. Aber auch andere Abtragverfahren, wie Fräsen oder Schleifen, sind einsetzbar. Auch eine Kombination unterschiedlicher Abtragverfahren ist verwendbar.

Das mindestens eine wiederaufzubereitende Wälzkörperbauteil ist insbesondere ein Wälzlagerring und der Abtrag im Laufbahnbereich erfolgt im Bereich von D/100 bis D/20 eines Durchmessers D der Wälzkörper des Wälzlagers. Bevorzugt erfolgt ein Abtrag im Bereich von 0,5 bis 5%, vorzugsweise 0,5 bis 1,5 %, eines Durchmessers D der Wälzkörper des Wälzlagers. Der Abtrag erfolgt dabei meist im Bereich von 0,4 bis 10 mm.

Das mindestens eine wiederaufzubereitende Wälzlagerbauteil ist bevorzugt ein Wälzlagerring und weist insbesondere einen Bohrungsdurchmesser von größer oder gleich 50 mm, insbesondere von größer oder gleich 120 mm, auf.

Der metallische Grundwerkstoff wird bevorzugt aus Wälzlagerstahl, Vergütungsstahl, Baustahl oder Einsatzstahl ausgewählt.

Bei dem Reparaturwerkstoff handelt es sich bevorzugt um einen Stahl mit einem Anteil von
0 bis 10 Gew.-% Mo,
0 bis 19 Gew.-% W,
0 bis 5 Gew.-% V,
3,5 bis 5 Gew.-% Cr,
0 - 11 Gew.-% Co,
0,75 bis 1,2 Gew.-% C,
Rest Eisen und unvermeidbare Verunreinigungen oder weitere Elemente, wie Mn, Si, Cu, Ni, P, S, mit einem Anteil von kleiner als 0,5 Gew.-%.

Erfindungsgemäß wird in einer ersten Variante Stahl der Sorte 1.3344 (X 130 WMoCrV 6-5-4-3) eingesetzt. Nachdem keine Wärmebehandlung angewendet wird, kann Restaustenit vorliegen (bis ca. 30%) mit einer Härte des aufgebauten Materials größer 62 HRC.

Alternativ handelt es sich in einer zweiten Variante bei dem Reparaturwerkstoff erfindungsgemäß um einen martensitischen Edelstahl, wie einen der Sorte 1.4034 (X46Cr13), oder in einer dritten Variante um ein Hartmetall auf Basis von Wolframkarbid in einer Nickel-Bindematrix, am Markt auch bekannt unter der Bezeichnung "Cermadur".

Als Zwischenlagenmaterial wird insbesondere ein nicht härtbarer Stahl mit einem Kohlenstoffgehalt von kleiner als 0,15 % eingesetzt. Dies soll die Haftung am Grundwerkstoff und die Herstellung des Reparaturwerkstoffs auf dem Zwischenlagenmaterial verbessern. Ein Auftrag des Zwischenlagenmaterials auf den Grundwerkstoff erfolgt vorzugsweise auf gleiche Weise wie der nachfolgend beschriebene Auftrag des Reparaturwerkstoffs.

Das Auftragen des metallischen Reparaturwerkstoffes kann durch jedes Materialauftragende Verfahren erfolgen, bei welchem eine metallische Verbindung zwischen dem Grundwerkstoff und dem Reparaturwerkstoff ausgebildet wird. Das Auftragen erfolgt insbesondere mittels eines gerichteten Energieeinbringverfahrens (Directed Energy Desposition DED), beispielsweise mittels Laser, Elektronenstrahl oder Plasmaentladung. Dabei wird ein Pulver oder Draht auf der Oberfläche des metallischen Grundwerkstoffs im Aufnahmebereich oder auf dem Zwischenlagenmaterial im Aufnahmebereich aufgeschmolzen. Dadurch ergibt sich im Übergangsbereich zwischen dem Grundwerkstoff und dem Reparaturwerkstoff beziehungsweise dem Zwischenlagenmaterial und dem Reparaturwerkstoff eine wellige Struktur, die im Schliffbild erkennbar ist und durch die Prozessparameter beim gerichteten Energieeinbringungsverfahren beeinflussbar ist.

Die dabei entstehende Wärmeeinflusszone erstreckt sich, gegebenenfalls über das Zwischenlagenmaterial hinweg, in den Grundwerkstoff hinein, wobei die Welligkeit sich über einen Bereich erstreckt, der dem gemessenen Abstand zwischen dem Mittelwert der Wellenspitzen und dem Mittelwert der Wellentäler entspricht, wobei dieser Abstand mindestens 50 µm beträgt. Dies gewährleistet eine besonders innige und porenfreie Verbindung zwischen dem Grundwerkstoff und dem Reparaturwerkstoff. Die Welligkeit und Ausdehnung der Wärmeeinflusszone ist dabei von den Auftragsparametern, wie Leistung, Auftragsgeschwindigkeit und Auftragsbreite, abhängig.

Die freie Oberfläche der Laufbahnschicht, welche dem Grundwerkstoff abgewandt ist, wird erfindungsgemäß spanabhebend nachbearbeitet und nachverfestigt. Dadurch werden die Ebenheit und Oberflächenrauhigkeit der freien Oberfläche der Laufbahnschicht den Anforderungen in der Anwendung der Wälzlagerbauteile angepasst. Insbesondere erfolgt als spanabhebende Nachbearbeitung eine Feinbearbeitung, vorzugsweise ein Honen der Laufbahnschicht. Die Feinbearbeitung erfolgt insbesondere in der Form, dass eine Amplitudendichteverteilung eine negative Schiefe mit einem Rsk-Wert kleiner -0,5 aufweist und die Oberfläche somit einen Plateaucharakter hat. Je nach Tiefe der Nachverfestigung wird die Oberfläche glattgewalzt (geringe Tiefenwirkung), festgewalzt (mittlere Tiefenwirkung) oder ringgewalzt (gleichzeitige Wärmebehandlung).

Das wiederaufbereitete Wälzlagerbauteil wird entweder nachfolgend nicht weiter wärmebehandelt, wobei der metallische Reparaturwerkstoff eine Rockwellhärte von mindestens 60 HRC aufweist. Alternativ kann das wiederaufbereitete Wälzlagerbauteil nachfolgend wärmebehandelt werden und eine Rockwellhärte von mindestens 63 HRC aufweisen.

Bei einem Wälzlager, das nach dem erfindungsgemäßen Verfahren hergestellt ist, weist das metallische Reparaturmaterial eine Rockwellhärte von mindestens 60 HRC auf. Das metallische Grundmaterial weist bevorzugt eine demgegenüber niedrigere Härte auf.

Insbesondere weist das metallische Reparaturmaterial eine Härte größer 62 HRC, ohne nachfolgende, die Härte erhöhende Prozesse wie Karbonitrieren oder eine Wärmebehandlung, auf.

Bei dem Wälzlagerbauteil handelt es sich um einen Wälzkörper oder einen Lagerring. Die Wälzlagerbauteile werden insbesondere für Wälzlager vom Typ Kugellager, Zylinderrollenlager, Pendelrollenlager, Kegelrollenlager und dergleichen eingesetzt. Bei Kugellagern und Pendelrollenlagern eignen sich insbesondere die Wälzlagerringe für eine Aufbereitung mittels des erfindungsgemäßen Verfahrens. Bei Zylinderrollenlagern und Kegelrollenlagern eignen sich neben den Wälzlagerringen aber auch die Wälzkörper zur Aufbereitung im erfindungsgemäßen Verfahren.

Die Dicke der Laufbahnschicht variiert entsprechend der Größe des Wälzlagerbauteils und den anzunehmenden Belastungen in der Anwendung. Das mindestens eine wiederaufzubereitende Wälzkörperbauteil ist vorzugsweise ein Wälzlagerring und der Auftrag im Laufbahnbereich erfolgt im Bereich von D/100 bis D/20 eines Durchmessers D der Wälzkörper des Wälzlagers. Bevorzugt entspricht die Dicke der Laufbahnschicht bei Wälzlagerringen 0,5 bis 5 %, vorzugsweise 0,5 bis 1,5 %, des Durchmessers D eines Wälzkörpers im betreffenden Lager, und liegt daher meist im Bereich von 0,4 mm bis 10 mm.

In der Übergangszone zwischen Grundwerkstoff und Reparaturwerkstoff beziehungsweise Zwischenlagenmaterial und Reparaturwerkstoff sind die Materialien miteinander verschmolzen und damit stoffschlüssig verbunden. Ein Härteabfall direkt im Anschluss an diese Übergangszone ist messbar. Die Übergangszone beschreibt einen charakteristischen welligen Verlauf, der im Wesentlichen durch das Auftragsverfahren der gerichteten Energieeinbringung erhalten wird und, wie oben beschrieben, durch die Prozessparameter beeinflusst werden kann.

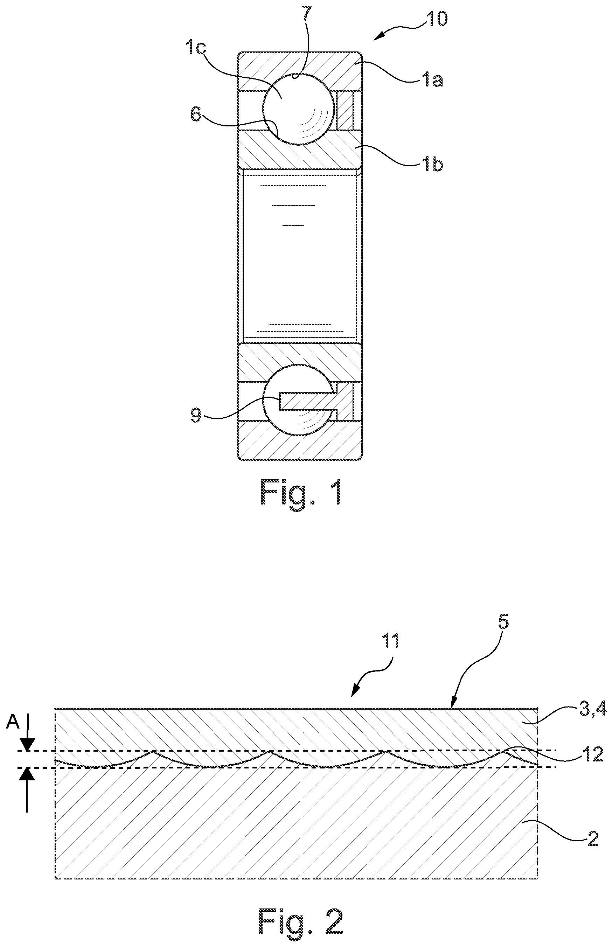

Die Figuren 1 und 2 sollen das erfindungsgemäße Verfahren und ein wiederaufbereitetes Wälzlagerbauteil beispielhaft erläutern. So zeigt:
- Figur 1: einen Schnitt durch ein gebrauchtes Wälzlager in Form eines Kugellagers, und
- Figur 2: ein Schliffbild eines Schnitts durch ein wiederaufbereitetes Wälzlagerbauteil.

Figur 1 zeigt einen Schnitt durch ein gebrauchtes Wälzlager 10 in Form eines beispielhaft gewählten Kugellagers. Ein erstes Wälzlagerbauteil in Form eines Wälzlagerringes 1a (= Außenring) ist aus einem metallischen Grundwerkstoff 2 (vergleiche Figur 2) gebildet und weist einen Laufbahnbereich 7 auf. Ein zweites Wälzlagerbauteil in Form eines Lagerringes 1b (= Innenring) ist aus einem metallischen Grundwerkstoff 2 (vergleiche Figur 2) gebildet und weist einen Laufbahnbereich 6 auf. Die Wälzkörper 1c sind aus einem keramischen Werkstoff gebildet. Weiterhin ist ein Käfig 9 zur Halterung der Wälzkörper 1c vorhanden. Hier wird das Wälzlagerbauteil in Form des Lagerringes 1a oder Außenringes für die Wiederaufbereitung ausgewählt. Der Laufbahnbereich 7 des gebrauchten Wälzlagerbauteils wird der Wiederaufbereitung zugeführt, indem ein Abtragen eines Oberflächenbereiches des Lagerringes 1a erfolgt, der dem durch Verschleiß im Gebrauch des Wälzlagers 10 beeinträchtigen Laufbahnbereich 7 entspricht, unter Vorbereitung eines Aufnahmebereiches zur Aufnahme eines metallischen Reparaturwerkstoffs 3.

Danach wird der metallische Reparaturwerkstoffes 3 in dem Aufnahmebereich unter Ausbildung einer Laufbahnschicht 4 aufgetragen, wobei der metallische Reparaturwerkstoff 3 mit dem Grundwerkstoff 2 verschmolzen wird. Die freie Oberfläche 5 der Laufbahnschicht 4 (vergleiche Figur 2), welche dem Grundwerkstoff 2 abgewandt ist, wird einer Nachbearbeitung unterzogen. Im Ergebnis liegt ein wiederaufbereitetes Wälzlagerbauteil 11 vor, das in einem Wälzlager 10 wieder als Lagerring 1a oder Au-ßenring zusammen mit den weiteren, nicht bearbeiteten Bestandteilen des gebrauchten Wälzlagers 10 zur Bildung eines wiederaufbereiteten Wälzlagers eingesetzt werden kann. Zwischen dem Grundwerkstoff 2 und dem Reparaturwerkstoff 3 kann optional eine Zwischenlagenmaterial angeordnet sein, wobei dann zuerst das Zwischenlagenmaterial mit dem Grundwerkstoff 2 verschmolzen wird und der Reparaturwerkstoff 3 danach mit dem Zwischenlagenmaterial verschmolzen wird.

Figur 2 zeigt ein Schliffbild eines Schnitts durch ein wiederaufbereitetes Wälzlagerbauteil 11. Der Grundwerkstoff 2 weist eine mittels eines gerichteten Energieeinbringungsverfahrens gebildete Laufbahnschicht 4 aus dem Reparaturwerkstoff 3 auf. Im Übergangsbereich 12, in welchem der Grundwerkstoff 2 mit dem Reparaturwerkstoff 3 verschmolzen ist, liegt eine wellige Struktur vor. Der Abstand A zwischen dem Mittelwert der Wellenberge und dem Mittelwert der Wellentäler (siehe gestrichelte Linien) beträgt mindestens 50 µm. Die freie Oberfläche 5 der Laufbahnschicht 4, welche dem Grundwerkstoff 2 abgewandt ist, ist hier schleifend nachbearbeitet worden.

### Bezugszeichenliste

- 1a, 1b: Wälzlagerring
- 1c: Wälzkörper
- 2: metallischer Grundwerkstoff
- 3: metallischer Reparaturwerkstoff
- 4: Laufbahnschicht
- 5: freie Oberfläche der Laufbahnschicht
- 6: Laufbahnbereich
- 7: Laufbahnbereich
- 9: Käfig
- 10: Wälzlager
- 11: wiederaufbereitetes Wälzlagerbauteil
- 12: Übergangsbereich
- A: Abstand

## Patentansprüche

1. Verfahren zur Wiederaufbereitung gebrauchter Wälzlager (10) umfassend Wälzlagerbauteile aus einem metallischen Grundwerkstoff (2) mit folgenden Schritten:
Bereitstellen des gebrauchten Wälzlagers (10) umfassend mindestens einen Wälzlagerring (1a, 1b) und eine Anzahl an Wälzkörpern (1c), wobei aus dem metallischen Grundwerkstoff (2) gebildete Wälzlagerringe (1a, 1b) und/oder Wälzkörper (1c) wiederaufbereitbare Wälzkörperbauteile bilden,
Vereinzeln zumindest der wiederaufbereitbaren Wälzkörperbauteile und Identifizieren mindestens eines der Wiederaufbereitung zuzuführenden Wälzlagerbauteiles aus der Menge an wiederaufbereitbaren Wälzlagerbauteilen,
Abtragen eines Oberflächenbereiches des mindestens einen wiederaufzubereitenden Wälzlagerbauteiles, der einem Laufbahnbereich (6, 7) des wiederaufzubereitenden Wälzlagerbauteiles entspricht, unter Vorbereitung eines Aufnahmebereiches zur Aufnahme eines metallischen Reparaturwerkstoffs (3),
optionales Auftragen eines Zwischenlagenmaterials auf den metallischen Grundwerkstoff im Aufnahmebereich,
Auftragen des metallischen Reparaturwerkstoffes (3) in dem Aufnahmebereich auf den metallischen Grundwerkstoff oder gegebenenfalls auf das Zwischenlagenmaterial unter Ausbildung einer Laufbahnschicht (4), wobei der metallische Reparaturwerkstoff (3) aus Stahl der Sorte 1.3344 (X 130 WMoCrV 6-5-4-3) oder aus martensitischem Edelstahl, insbesondere der Sorte 1.4034 (X46Cr13), oder aus einem Hartmetall auf Basis von Wolframkarbid in einer Nickel-Bindematrix ausgewählt wird, wobei der metallische Reparaturwerkstoff (3) mit dem metallischen Grundwerkstoff (2) oder gegebenenfalls dem Zwischenlagenmaterial verschmolzen wird,
Durchführung einer Nachbearbeitung einer freien Oberfläche (5) der Laufbahnschicht (4) unter Bereitstellung mindestens eines wiederaufbereiteten Wälzlagerbauteiles (11), wobei die freie Oberfläche (5) der Laufbahnschicht (4) spanabhebend nachbearbeitet und nachverfestigt wird, und
Zusammenbau des mindestens einen wiederaufbereiteten Wälzlagerbauteils (11) mit den übrigen Wälzlagerbauteilen des gebrauchten Wälzlagers (10) zu einem wiederaufbereiteten Wälzlager.

2. Verfahren nach Anspruch 1, wobei das Abtragen des Oberflächenbereiches mittels Drehens erfolgt.

3. Verfahren nach einem der Ansprüche 1 oder 2, wobei das mindestens eine wiederaufzubereitende Wälzkörperbauteil ein Wälzlagerring (1a, 1b) ist und der Abtrag im Laufbahnbereich (6, 7) im Bereich von D/100 bis D/20 eines Durchmessers (D) der Wälzkörper (1c) des Wälzlagers (10) erfolgt.

4. Verfahren nach einem der Ansprüche 1 bis 3, wobei das mindestens eine wiederaufzubereitende Wälzlagerbauteil ein Wälzlagerring (1a, 1b) ist und einen Bohrungsdurchmesser von größer als 50 mm aufweist.

5. Verfahren nach einem der Ansprüche 1 bis 4, wobei der metallische Grundwerkstoff (2) aus Wälzlagerstahl, Vergütungsstahl, Baustahl oder Einsatzstahl ausgewählt wird.

6. Verfahren nach einem der Ansprüche 1 bis 5, wobei als Zwischenlagenmaterial ein nicht härtbarer Stahl mit einem Kohlenstoffgehalt von kleiner als 0,15 % ausgewählt wird.

7. Verfahren nach einem der Ansprüche 1 bis 6, wobei das Auftragen des metallischen Reparaturwerkstoffes (3) mittels eines gerichteten Energieeinbringungsverfahrens erfolgt.

8. Verfahren nach einem der Ansprüche 1 bis 7, wobei das wiederaufbereitete Wälzlagerbauteil (11) nachfolgend feinbearbeitet wird.

9. Verfahren nach Anspruch 8, wobei die spanabhebende Nachbearbeitung eine Feinbearbeitung ist und in der Form erfolgt, dass eine Amplitudendichteverteilung eine negative Schiefe mit einem Rsk-Wert kleiner -0,5 aufweist und die nachbearbeitete Oberfläche somit einen Plateaucharakter aufweist.

10. Verfahren nach einem der Ansprüche 1 bis 9, wobei zur Nachverfestigung die nachbearbeitete Oberfläche glattgewalzt oder festgewalzt oder ringgewalzt wird, wobei beim Ringwalzen eine gleichzeitige Wärmebehandlung erfolgt.

11. Wiederaufbereitetes Wälzlager, hergestellt nach einem Verfahren nach einem der Ansprüche 1 bis 10, wobei das metallische Reparaturmaterial (3) eine Rockwellhärte von mindestens 60 HRC aufweist.

## Claims

1. A method for reprocessing used rolling bearings (10) comprising rolling bearing components made of a metallic base material (2) having the following steps:
providing the used rolling bearing (10) comprising at least one rolling bearing ring (1a, 1b) and a number of rolling bodies (1c), wherein the rolling bearing rings (1a, 1b) and/or rolling bodies (1c) formed from the metallic base material (2) constitute reprocessable rolling body components,
separating at least the reprocessable rolling body components and identifying at least one rolling bearing component to be fed for reprocessing from the quantity of reprocessable rolling bearing components,
removing a surface region of the at least one rolling bearing component to be reprocessed that corresponds to a raceway region (6, 7) of the rolling bearing component to be reprocessed so as to prepare a receiving region for receiving a metallic repair material (3),
optionally applying an interlayer material to the metallic base material in the receiving region, applying the metallic repair material (3) in the receiving region to the metallic base material or optionally to the interlayer material to form a raceway layer (4), the metallic repair material (3) being selected from steel of grade 1.3344 (X 130 WMoCrV 6-5-4-3) or from martensitic stainless steel, in particular of grade 1.4034 (X46Cr13), or from a cemented carbide based on tungsten carbide in a nickel binder matrix, the metallic repair material (3) being fused with the metallic base material (2) or optionally the interlayer material,
carrying out finishing of a free surface (5) of the raceway layer (4) by providing at least one reprocessed rolling bearing component (11), the free surface (5) of the raceway layer (4) being machining finished and finish-hardened, and
assembling the at least one reprocessed rolling bearing component (11) with the other rolling bearing components of the used rolling bearing (10) to form a reprocessed rolling bearing.

2. The method according to claim 1, wherein the removal of the surface region is carried out by means of rotation.

3. The method according to either one of claims 1 or 2, wherein the at least one rolling body component to be reprocessed is a rolling bearing ring (1a, 1b) and the removal in the raceway region (6, 7) is in the range of D/100 to D/20 of a diameter (D) of the rolling bodies (1c) of the rolling bearing (10).

4. The method according to any one of claims 1 to 3, wherein the at least one rolling bearing component to be reprocessed is a rolling bearing ring (1a, 1b) and has a bore diameter of more than 50 mm.

5. The method according to any one of claims 1 to 4, wherein the metallic base material (2) is selected from rolling bearing steel, quenched and tempered steel, structural steel or case-hardened steel.

6. The method according to any one of claims 1 to 5, wherein the interlayer material selected is a non-hardenable steel having a carbon content of less than 0.15%.

7. The method according to any one of claims 1 to 6, wherein the application of the metallic repair material (3) is carried out by means of a directed energy input method.

8. The method according to any one of claims 1 to 7, wherein the reprocessed rolling bearing component (11) is subsequently fine-machined.

9. The method according to claim 8, wherein the machining finishing is a fine machining and is carried out in such a way that an amplitude density distribution has a negative skewness with an Rsk value less than -0.5 and the finished surface thus has a plateau character.

10. The method according to any one of claims 1 to 9, wherein for finish-hardening the finished surface is smooth-rolled or deep-rolled or ring-rolled, wherein in the case of ring rolling a simultaneous heat treatment is carried out.

11. A reprocessed rolling bearing produced according to a method according to any one of claims 1 to 10, wherein the metallic repair material (3) has a Rockwell hardness of at least 60 HRC.

## Revendications

1. Procédé de retraitement de paliers à roulement (10) usagés comprenant des composants de palier à roulement constitués d'un matériau de base métallique (2) comportant les étapes suivantes :
fourniture du palier à roulement usagé (10) comprenant au moins une bague de palier à roulement (1a, 1b) et un certain nombre de corps roulants (1c), dans lequel les bagues de palier à roulement (1a, 1b) et/ou les corps roulants (1c) formés à partir du matériau de base métallique (2) forment des composants de corps roulants pouvant être retraités,
séparation au moins des composants de corps roulants pouvant être retraités et identification d'au moins un composant de palier à roulement à guider pour le retraitement parmi la quantité de composants de palier à roulement pouvant être retraités,
enlèvement d'une zone de surface d'au moins un composant de palier à roulement à retraiter, qui correspond à une zone de chemin de roulement (6, 7) du composant de palier à roulement à retraiter, tout en préparant une zone de réception pour recevoir un matériau de réparation métallique (3),
application optionnelle d'un matériau de couche intermédiaire sur le matériau de base métallique dans la zone de réception,
application du matériau de réparation métallique (3) dans la zone de réception sur le matériau de base métallique ou, le cas échéant, sur le matériau de couche intermédiaire pour former une couche de chemin de roulement (4), dans lequel le matériau de réparation métallique (3) est choisi parmi l'acier de type 1.3344 (X 130 WMoCrV 6-5-4-3) ou parmi l'acier inoxydable martensitique, en particulier de type 1.4034 (X46Cr13), ou parmi un métal dur à base de carbure de tungstène dans une matrice de liant nickel, dans lequel le matériau de réparation métallique (3) est fusionné avec le matériau de base métallique (2) ou, le cas échéant, le matériau de couche intermédiaire,
réalisation d'un post-traitement d'une surface libre (5) de la couche de chemin de roulement (4) en fournissant au moins un composant de palier à roulement retraité (11), dans lequel la surface libre (5) de la couche de chemin de roulement (4) est post-traitée et consolidée par enlèvement de copeaux, et
assemblage de l'au moins un composant de palier à roulement retraité (11) avec les autres composants de palier à roulement du palier à roulement usagé (10) pour former un palier à roulement retraité.

2. Procédé selon la revendication 1, dans lequel l'enlèvement de la zone de surface est effectué au moyen d'une rotation.

3. Procédé selon l'une des revendications 1 ou 2, dans lequel l'au moins un composant de corps roulant à retraiter est une bague de palier à roulement (1a, 1b) et l'enlèvement dans la zone de chemin de roulement (6, 7) s'effectue dans une zone de D/100 à D/20 d'un diamètre (D) des corps roulants (1c) du palier à roulement (10).

4. Procédé selon l'une des revendications 1 à 3, dans lequel l'au moins un composant de palier à roulement à retraiter est une bague de palier à roulement (1a, 1b) et présente un diamètre d'alésage supérieur à 50 mm.

5. Procédé selon l'une des revendications 1 à 4, dans lequel le matériau de base métallique (2) est choisi parmi l'acier à palier à roulement, l'acier pour trempe, l'acier de construction ou l'acier de cémentation.

6. Procédé selon l'une des revendications 1 à 5, dans lequel un acier non durcissable avec une teneur en carbone inférieure à 0,15 % est choisi comme matériau de couche intermédiaire.

7. Procédé selon l'une des revendications 1 à 6, dans lequel l'application du matériau de réparation métallique (3) s'effectue au moyen d'un procédé d'apport d'énergie dirigée.

8. Procédé selon l'une des revendications 1 à 7, dans lequel le composant de palier à roulement retraité (11) est ensuite soumis à un usinage de précision.

9. Procédé selon la revendication 8, dans lequel le post-traitement par enlèvement de copeaux est un usinage de précision et s'effectue de telle sorte qu'une distribution de densité d'amplitude présente une asymétrie négative avec une valeur Rsk inférieure à -0,5 et de telle sorte que la surface post-traitée présente ainsi un caractère de plateau.

10. Procédé selon l'une des revendications 1 à 9, dans lequel, à des fins de solidification ultérieure, la surface post-traitée est galetée ou écrouie ou soumise à un laminage circulaire, dans lequel, dans le cas du laminage circulaire, un traitement thermique simultané est effectué.

11. Palier à roulement retraité produit par un procédé selon l'une des revendications 1 à 10, dans lequel le matériau de réparation métallique (3) présente une dureté Rockwell d'au moins 60 HRC.
